(19) Europäisches Patentamt
European Patent Office
Office européen des brevets

(11) EP 1 233 561 A1

(12) **EUROPEAN PATENT APPLICATION**
published in accordance with Art. 158(3) EPC

(43) Date of publication:
**21.08.2002 Bulletin 2002/34**

(21) Application number: **01972716.3**

(22) Date of filing: **09.10.2001**

(51) Int Cl.7: **H04J 13/04**, H04B 1/707, H04L 27/22

(86) International application number:
**PCT/JP01/08841**

(87) International publication number:
**WO 02/032030 (18.04.2002 Gazette 2002/16)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.10.2000 JP 2000308883**

(71) Applicant: **MATSUSHITA ELECTRIC INDUSTRIAL CO., LTD.**
**Kadoma-shi, Osaka 571-8501 (JP)**

(72) Inventors:
- **ARIMA, Takenobu**
**Yokosuka-shi, Kanagawa 239-0847 (JP)**
- **MIYA, Kazuyuki**
**Asao-ku, Kawasaki-shi, Kanagawa 215-0021 (JP)**

(74) Representative: **Grünecker, Kinkeldey,**
**Stockmair & Schwanhäusser Anwaltssozietät**
**Maximilianstrasse 58**
**80538 München (DE)**

(54) **RECEIVING DEVICE AND RECEIVING METHOD**

(57) An angle detection circuit 202 detects the phase component of an in-phase-added pilot signal. A phase computation circuit 203 performs phase computation processing using the phase component of the in-phase-added pilot signal and a pilot block weight coefficient to obtain a channel estimate phase component. An absolute value computation circuit 204 detects the amplitude component of the in-phase-added pilot signal. An amplitude computation circuit 206 adds the amplitude components multiplied by pilot block weight coefficients to obtain a channel estimate amplitude component. A vector conversion circuit 207 converts the obtained phase component and amplitude component to a vector to obtain a channel estimate.

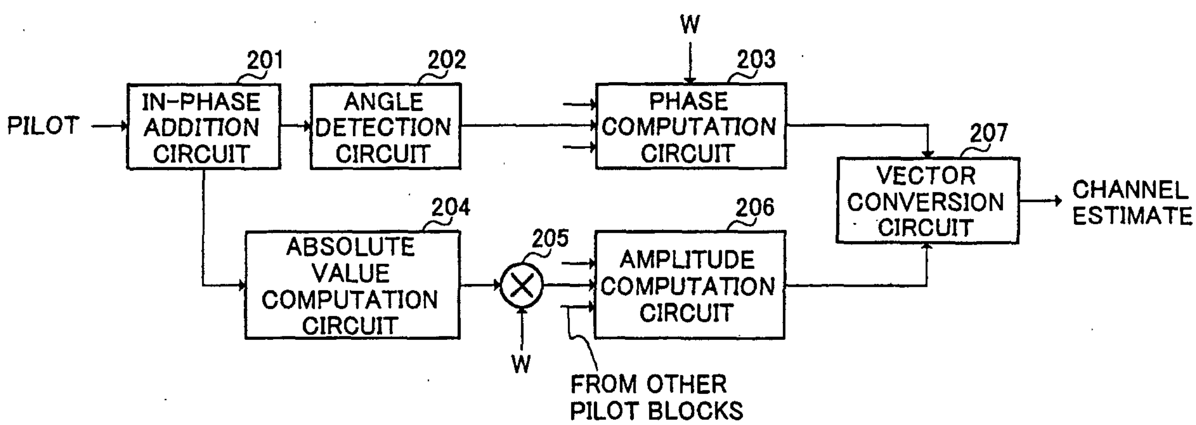


FIG.6

EP 1 233 561 A1

## Description

### Technical Field

The present invention relates to a receiving apparatus that performs channel estimation using a pilot signal (known signal), for use in a digital radio/cable communication system.

### Background Art

Heretofore, in a pilot interpolation type communication system (a system whereby a plot signal is inserted periodically in an information signal), a method in which channel estimation is performed using a plurality of pilot blocks has been proposed by Ando et al (RCS96-72 High-Precision Channel Estimation Method Using Multiple Pilot Blocks in DS-CDMA). This channel estimation method is described below with reference to FIG.1.

FIG.1 is a schematic diagram conceptually illustrating channel estimation by means of a conventional receiving apparatus. As shown in FIG.1, a conventional receiving apparatus employs a frame configuration whereby a pilot signal (known signal) of Np symbols is inserted periodically in an information signal (that is to say, a frame configuration in which a pilot signal of Np symbols is inserted in each slot). Using these pilot signals, a propagation path that fluctuates due to multipath Rayleigh fading is estimated. A pilot signal of Np symbols is called a "pilot block".

The pilot block in the nth slot (slot 21 in FIG. 1)-that is, the nth pilot block (pilot block 11 in FIG.1)-will be considered. First, the plurality of pilot symbols in pilot block 11 are in-phase-added, and the channel estimate of the nth pilot block is calculated. This channel estimate is expressed by the equation shown below. Here, p is an in-phase-added pilot symbol, and Cn is the channel estimate of the nth pilot block.

$$C_n = \sum_{m=0}^{Np-1} p_m \qquad (1)$$

Next, the channel estimates of K pilot blocks before and after (here, one pilot block before and after) nth slot 21 are subjected to weighted addition, and the channel estimate of nth slot 21 is calculated. This channel estimate is expressed by the equation shown below. Here, Wn is the weight coefficient of the nth slot.

$$\xi_n = \sum_{l=-K+1}^{K} W_l c_l \qquad (2)$$

Using the channel estimate calculated in this way, nth slot coherent detection is performed, and RAKE combining is carried out.

Next, a configuration for implementing the above conventional channel estimation will be described with reference to FIG.2 and FIG.3 in addition to FIG.1. FIG.2 is a block diagram showing the configuration of a conventional receiving apparatus, and FIG.3 is a block diagram showing the configuration of a channel estimation circuit in a conventional receiving apparatus.

In FIG.2, a received signal undergoes A/D conversion by an A/D converter 31, and is sent to a despreading circuit 32. In the despreading circuit 32, a pilot signal and data signal (information signal) are despread using the AID converted received signal. The despread pilot signal is sent to a channel estimation circuit 33, and the despread data signal is sent to a coherent detection circuit 34.

In the channel estimation circuit 33, channel estimation is performed using the despread pilot signal, and a channel estimate for coherent detection is obtained. Specifically, the despread pilot signal (that is, the pilot symbols in the nth pilot block) is subjected to in-phase addition by an in-phase addition circuit 41 as shown in FIG.3. This in-phase addition corresponds to what is described in Equation (1) above. The channel estimate obtained by in-phase addition by the in-phase addition circuit 41 is multiplied by a weight coefficient by a multiplier 42. For example, when the nth pilot block is pilot block 11 (see FIG.1), the channel estimate for pilot block 11 will be multiplied by weight coefficient W2. This multiplication corresponds to what is described in Equation (2) above. The channel estimate that has been multiplied by a weight coefficient is sent to a vector addition circuit 43.

The vector addition circuit 43 performs vector addition of the channel estimate multiplied by a weight coefficient by the multiplier 42 and channel estimates of other pilot blocks that have been multiplied by weight coefficients. For example, when the nth pilot block is pilot block 11 (see FIG.1), the channel estimate of pilot block 11 that has been multiplied by weight coefficient W2 undergoes vector addition to the channel estimate of pilot block 10 that has been multiplied by weight coefficient W1 and the channel estimate of pilot block 12 that has been multiplied by weight coefficient W3. By this means, a channel estimate for coherent detection is obtained.

The channel estimate obtained by the channel estimation circuit 33 in this way is sent to the coherent detection circuit 34 shown in FIG.2. Referring to FIG.2 again, by the coherent detection circuit 34, coherent detection processing is performed using the despread data signal from the despreading circuit 32 and the channel estimate from the channel estimation circuit 33. The data signal that has undergone coherent detection is sent to a RAKE combining circuit 35.

The above-mentioned despreading circuit 32,

channel estimation circuit 33, and coherent detection circuit 34 are provided for each finger. Data signals subjected to coherent detection by the coherent detection circuit 34 of each finger (FIG.2 shows an example in which the number of fingers is three) undergo RAKE combining by the RAKE combining circuit 35.

However, the above-described conventional receiving apparatus has the following problem: namely, if the phase rotation amount due to frequency offset, fading, or the like, is large during a period in which a pilot signal is inserted (that is, a period in which a pilot block in FIG.1 is inserted, for example), when vector combining using weighted addition is performed by the channel estimation circuit 33 in FIG.2, the amplitude component of a channel estimate that has undergone weighted addition will decrease.

An actual example for the decrease in the amplitude component of a channel estimate that has undergone weighted addition will be described with reference to FIG.4A and FIG.4B. FIG.4A is a schematic diagram showing a first example of the amplitude component of a channel estimate that has undergone weighted addition by a conventional receiving apparatus, and FIG.4B is a schematic diagram showing a second example of the amplitude component of a channel estimate that has undergone weighted addition by a conventional receiving apparatus. In order to simplify the explanation, it is here assumed that the channel estimate of the nth pilot block is subjected to weighted addition to the channel estimate of another pilot block (the pilot block immediately before or immediately after the nth pilot block).

First, a case where a phase rotation amount due to frequency offset, fading, or the like during a period in which a pilot signal has been inserted is small, will be described with reference to FIG.4A. In FIG.4A, a channel estimate 51 indicates the channel estimate of the nth pilot block, and a channel estimate 52 indicates the channel estimate of another pilot block.

In this case, since the phase rotation amount between the channel estimate 51 and the channel estimate 52 is small, the decrease in the amplitude component of a channel estimate 53, which is obtained by performing weighting and vector combining using the channel estimate 51 and channel estimate 52, is small. The fact that the amplitude of the channel estimate 53 is not the amplitude of the channel estimate 51 + the channel estimate 52 is due to the weight coefficient.

Next, a case where a phase rotation amount due to frequency offset, fading, or the like, during a period in which a pilot signal has been inserted is large, will be described with reference to FIG.4B. In FIG.4B, a channel estimate 54 indicates the channel estimate of the nth pilot block, and a channel estimate 55 indicates the channel estimate of another pilot block.

In this case, since the phase rotation amount between the channel estimate 54 and the channel estimate 55 is large, the amplitude component of a channel estimate 56, which is obtained by performing weighting and vector combining using channel estimate 54 and channel estimate 55, decreases greatly.

Therefore, in the above-described conventional receiving apparatus, even if a phase rotation amount due to frequency offset, fading, or the like during a period in which a pilot signal is inserted is large, coherent detection is performed using a channel estimate whose amplitude component has decreased, and therefore the amplitude of a data signal obtained by means of the associated coherent detection also decreases. Thus, maximal-ratio combining of data signals that have undergone coherent detection cannot be carried out upon RAKE combining, and consequently the reception quality of a data signal obtained by means of RAKE combining will deteriorate.

Thus, as explained above, with the above-described conventional receiving apparatus, there is a possibility of data signal (information signal) reception quality deteriorating due to the effects of frequency offset or fading.

## Disclosure of Invention

It is an object of the present invention to provide a receiving apparatus whereby the amount of computation is suppressed, channel estimation precision is improved, and deterioration of information signal reception quality is reduced, even in a situation where frequency offset and fading are present.

In order to achieve the above object, in the present invention, the amplitude components and phase components of respective channel estimates are calculated, by calculating an in-phase addition value for every plural pilot symbols by in-phase addition of pilot signals, and performing weighted addition using individually the amplitude components and phase components of the calculated in-phase addition values.

## Brief Description of Drawings

FIG.1 is a schematic diagram conceptually illustrating channel estimation by means of a conventional receiving apparatus.

FIG.2 is a block diagram showing the configuration of a conventional receiving apparatus.

FIG.3 is a block diagram showing the configuration of a channel estimation circuit in a conventional receiving apparatus.

FIG. 4A is a schematic diagram showing a first example of the amplitude component of a channel estimate that has undergone weighted addition by a conventional receiving apparatus.

FIG.4B is a schematic diagram showing a second example of the amplitude component of a channel estimate that has undergone weighted addition by

a conventional receiving apparatus.

FIG.5 is a block diagram showing the configuration of a receiving apparatus according to Embodiment 1 of the present invention.

FIG.6 is a block diagram showing the configuration of a channel estimation circuit in a receiving apparatus according to Embodiment 1 of the present invention.

FIG.7 is a schematic diagram conceptually illustrating channel estimation by means of a receiving apparatus according to Embodiment 1 of the present invention.

FIG.8 is a block diagram showing the configuration of a receiving apparatus according to Embodiment 2 of the present invention.

FIG.9 is a block diagram showing the configuration of a channel estimation circuit in a receiving apparatus according to Embodiment 2 of the present invention.

FIG.10 is a block diagram showing the configuration of a channel estimation circuit in a receiving apparatus according to Embodiment 3 of the present invention.

FIG.11 is a block diagram showing the configuration of a channel estimation circuit in a receiving apparatus according to Embodiment 4 of the present invention.

Best Mode for Carrying out the Invention

With reference to the accompanying drawings, embodiments of the present invention will be explained in detail below.

(Embodiment 1)

FIG.5 is a block diagram showing the configuration of a receiving apparatus according to Embodiment 1 of the present invention. In FIG.5, an A/D converter 101 performs A/D conversion of a received signal, and sends the resulting signal to a despreading circuit 102. The despreading circuit 102 despreads a pilot signal and data signal (information signal) using the A/D converted received signal, sends the despread pilot signal to a channel estimation circuit 103, and sends the despread data signal to a coherent detection circuit 104.

The channel estimation circuit 103 performs channel estimation using the despread pilot signal, obtains a channel estimate for coherent detection, and sends this channel estimate to the coherent detection circuit 104. The specific configuration of this channel estimation circuit 103 will be described later herein. The coherent detection circuit 104 performs coherent detection processing using the despread data signal from the despreading circuit 102 and the channel estimate from the channel estimation circuit 103.

The above-mentioned despreading circuit 102, channel estimation circuit 103, and coherent detection circuit 104 are provided for each finger (FIG.5 shows an example in which the number of fingers is three). Data signals subjected to coherent detection by the coherent detection circuit 104 in each finger are sent to a RAKE combining circuit 105.

FIG. 6 is a block diagram showing the configuration of a channel estimation circuit in a receiving apparatus according to Embodiment 1 of the present invention. In FIG.6, an in-phase addition circuit 201 performs n-symbol in-phase addition (where n is an integer of 1 or above) of the pilot signal despread by the despreading circuit 102 shown in FIG.5 for each pilot block.

An angle detection circuit 202 detects the angular component of the pilot signal (in-phase addition value) subjected to in-phase addition by the in-phase addition circuit 201, and sends it to a phase computation circuit 203. The phase computation circuit 203 performs phase computation processing using the pilot signal angular component from the angle detection circuit 202 and the weight coefficient of each pilot block, and obtains the phase component of a channel estimate.

An absolute value computation circuit 204 performs absolute value processing on the pilot signal (in-phase addition value) subjected to in-phase addition by the in-phase addition circuit 201, detects the amplitude component of this pilot signal (in-phase addition value) subjected to in-phase addition, and sends it to a multiplier 205. The multiplier 205 multiplies together the pilot signal amplitude component from the absolute value computation circuit 204 and the pilot block weight coefficient. An amplitude computation circuit 206 adds the amplitude components multiplied by each pilot block weight coefficient, and obtains the amplitude component of the channel estimate.

A vector conversion circuit 207 converts the channel estimate phase component from the phase computation circuit 203 and the channel estimate amplitude component from the amplitude computation circuit 206 to a vector, and outputs the channel estimate.

Next, the operation of a receiving apparatus that has the above configuration will be described with reference to FIG.7 in addition to FIG.5 and FIG.6. FIG. 7 is a schematic diagram conceptually illustrating channel estimation by means of a receiving apparatus according to Embodiment 1 of the present invention. FIG. 7 shows an example in which a receiving apparatus according to this embodiment is applied to a W-CDMA uplink.

In a W-CDMA uplink, a data channel (channel for communicating a data signal) is placed in the in-phase component, and a control channel (channel for communicating a control signal such as a pilot signal, or the like) is placed in the quadrature component (IQ multiplexing), and HPSK modulation with use of a scrambling code is also performed before transmission.

As shown in FIG. 7, the receiving apparatus according to this embodiment receives a signal in which data signals (for example, "A" and "B" in FIG.7) transmitted through the data channel, and a control signal (for example, "Pilot" in FIG.7) transmitted through the control channel, are IQ-multiplexed. In the control channel, a frame configuration is used whereby an n-symbol pilot signal (known signal) is inserted periodically into the control signal. An n-symbol pilot signal ("Pilot" in FIG.7) corresponds to the above-described pilot block.

The operation of the receiving apparatus according to this embodiment will be described below, taking the case in which channel estimation is performed using a pilot block 302 in FIG.7 as an example. In FIG. 5, a received signal undergoes A/D conversion by the A/D converter 101, and is sent to the despreading circuit 102. In the despreading circuit 102, using the A/D converted received signal, a pilot signal (such as "Pilot" in FIG.7) and a data signal ("A" and "B" in FIG.7) are despread. The despread pilot signal is sent to the channel estimation circuit 103, and the despread data signal is sent to the coherent detection circuit 104.

In the channel estimation circuit 103, channel estimation is performed using the despread pilot signal, and a channel estimate for coherent detection is obtained. Specifically, referring to FIG.6, the despread pilot signal (that is, n-symbol pilot symbols in the pilot block 302) is subjected to in-phase addition by the in-phase addition circuit 201. In the angle detection circuit 202, the angular component of the in-phase-added pilot block 302 is detected. The detected angular component is sent to the phase computation circuit 203.

In the phase computation circuit 203, phase computation processing is performed using the pilot signal angular component from the angle detection circuit 202 and the weight coefficient of each pilot block. By this means, the phase component of the channel estimate for the pilot block 302 is obtained. Specifically, the phase component of the channel estimate for pilot block 302 is obtained in accordance with the following equation, using the angular component of the in-phase-added pilot block 302, the angular component of an in-phase-added pilot block 301, the angular component of an in-phase-added pilot block 303, and the weight coefficient of each pilot block, i.e. W1 through W3 (see FIG.7).

$$\theta_x + \Sigma\{ W_n /(W_x + W_n) \times (\theta_n - \theta_x)\} \quad (3)$$

?x (n ? x) is the angular component of a reference pilot block; the angular component of any pilot block may be used. Wn is the weight coefficient of pilot block n, and Wx is the weight coefficient of the reference pilot block. In this embodiment, n = 3. The phase component of the channel estimate of the pilot block 302 calculated in this way is sent to the vector conversion circuit 207.

Meanwhile, in the absolute value computation circuit 204, absolute value processing is performed on the in-phase-added pilot signal (that is, the pilot block 302), the amplitude component of this in-phase-added pilot block 302 is detected. The detected amplitude component is multiplied, by the pilot block 302, by weight coefficient (W2), and the result is sent to the amplitude computation circuit 206.

In the amplitude computation circuit 206, amplitude components multiplied by each pilot block weight coefficient are added, and the amplitude component of the channel estimate of the pilot block 302 is obtained. Specifically, the amplitude component of the channel estimate of the pilot block 302 is obtained in accordance with the following equation, using the amplitude component of the pilot block 302 multiplied by weight coefficient (W2), the amplitude component of the pilot block 301 multiplied by weight coefficient (W1), and the amplitude component of the pilot block 303 multiplied by weight coefficient (W3). Here, an is the amplitude component of pilot block n.

$$\Sigma(a_n \times W_n) \quad (4)$$

The amplitude component of the channel estimate of the pilot block 302 calculated in this way is sent to the vector conversion circuit 207. In the vector conversion circuit 207, the phase component of the channel estimate of the pilot block 302 from the phase computation circuit 203 and the amplitude component of the channel estimate of the pilot block 302 from the amplitude computation circuit 206 are converted to a vector. By this means, the channel estimate of the pilot block 302 is obtained.

As described above, after the in-phase-added pilot signal phase component and amplitude component are calculated for each pilot block, the channel estimate phase component and amplitude component are calculated individually by performing weighted addition of the phase component of each pilot block and the amplitude component of each pilot block individually. Then, the channel estimate is obtained by converting the calculated channel estimate phase component and amplitude component to a vector. By this means, even in a situation where a phase rotation amount caused by frequency offset and fading is large, as illustrated in FIG.4B, it is possible to prevent the finally obtained channel estimate amplitude component from decreasing, by performing weighted addition of the channel estimate 54 and the channel estimate 55 for each amplitude component and for each phase component, instead of simply performing vector addition of the channel estimate 54 and the channel estimate 55 as heretofore.

The channel estimate of the pilot block 302 obtained in this way is sent to the coherent detection circuit 104 shown in FIG.5. In the coherent detection circuit 104, coherent detection processing is performed using the despread data signal from the despreading circuit

102 and the channel estimate from the channel estimation circuit 103. That is to say, for example, to consider coherent detection processing for a data signal 304 (see FIG.7), coherent detection processing is performed in the coherent detection circuit 104 using the despread data signal 304 from the despreading circuit 102 and the channel estimate of the pilot block 302 from the channel estimation circuit 103. By this means, the data signal 304 that has undergone coherent detection is obtained.

The data signal that has undergone coherent detection is RAKE-combined together with data signals in the other fingers in the RAKE combining circuit 105. In this embodiment, a reduction in amplitude of the data signal from the coherent detection circuit 104 in each finger can be suppressed, and therefore maximal-ratio combining of the data signals that have undergone coherent detection can be performed by the RAKE combining circuit 105. Thus, the reception quality of the data signal obtained by means of RAKE combining is preferable.

The operation of the receiving apparatus according to this embodiment has been described above taking a case where channel estimation is performed using the pilot block 302 in FIG.7 as an example. However, it goes without saying that it is possible to perform channel estimation using any pilot block. Also, in this embodiment, a case has been described where the angular component and amplitude component of the pilot blocks immediately before and immediately after the pilot block 302 are used (that is, n = 3), but it is also possible to use a greater number of preceding and following pilot blocks.

Moreover, it is also possible to switch weight coefficients (in this embodiment, W1 through W3) used in weighted addition in midcourse of a slot (that is, in accordance with the position in the received signal of the information signal subject to coherent detection). For example, when performing demodulation (coherent detection) of the data signal 304 in FIG.7, it is possible to set weight coefficients, so that (W1, W2, W3) = (0.2, 0.6, 0.2). Such weight coefficient settings reflect the fact that the state of a propagation path for the data signal 304 is closest to the state of a propagation path for the pilot block 302 and the pilot block 303.

Furthermore, when performing demodulation (coherent detection) of a data signal 305 in FIG.7, it is possible to set weight coefficients so that (W1, W2, W3) = (0, 0.5, 0.5). Such weight coefficient settings reflect the fact that the state of a propagation path for the data signal 305 is closest to the state of the propagation path for the pilot block 302 and the pilot block 303. Weight coefficients are normalized so that the sum total of all weight coefficients is always constant (in this embodiment, for example, 1).

By switching weight coefficients in midcourse of a slot (that is, in accordance with the position in the received signal of the information signal subject to coherent detection) so that the pilot block corresponding to the propagation path closest to the propagation path for the data signal to be demodulated is reflected in channel estimation, as described above,higher-precision channel estimation can be performed even when a phase rotation amount is large.

Thus, according to this embodiment, by performing weighted addition of channel estimates of each pilot block (pilot signal) for each amplitude component and for each phase component, and obtaining the channel estimate phase component and amplitude component individually, and furthermore calculating the channel estimate by converting the obtained phase component and amplitude component to a vector, it is possible to suppress the amount of computation and to reduce deterioration of information signal reception quality even in a situation where frequency offset, fading, and so forth, are present. Also, higher-precision channel estimation can be performed by switching weight coefficients in midcourse of a slot.

In this embodiment, a case has been described, as an example, where a signal that has been transmitted with a data channel and a control channel IQ-multiplexed is received, but the present invention is not restricted to this, and as long as a configuration is employed whereby a channel estimate is obtained by weighted addition of a plurality of pilot signals, the present invention can also be applied to reception of a signal transmitted with any frame format (one example being the frame format shown in FIG.1). That is to say, the present invention, can be applied, for example, not only to a case where a signal is received that has been transmitted using a frame format whereby a pilot block of a predetermined number of symbols (n symbols) is inserted periodically in each slot (see FIG.1), but also to a case such as that where a signal is received that has been transmitted using a frame format whereby pilot blocks set up so that the number of symbols differs for each slot are inserted periodically in each slot.

(Embodiment 2)

In this embodiment, a case is described, with reference to FIG.8, where the channel estimation described in Embodiment 1 or a conventional channel estimation is performed in accordance with a phase rotation amount. FIG.8 is a block diagram showing the configuration of a receiving apparatus according to Embodiment 2 of the present invention. The sections in FIG.8 identical to those in Embodiment 1 (FIG.5) will be given the same numerals as in FIG.5 without further explanations thereof.

In FIG.8, a phase rotation detection circuit 401 finds the phase difference of this signal and detect its phase rotation amount using a signal despread by the dispreading circuit 102 (it is possible to use, e.g., a data signal, but it is also possible to use a pilot signal or other control signal). This phase rotation detection circuit 401 sends the detected phase rotation amount to a channel

estimation circuit 402.

FIG.9 is a block diagram showing the configuration of a channel estimation circuit in the receiving apparatus according to Embodiment 2 of the present invention. The sections in FIG.9 identical to those in Embodiment 1 (FIG.6) and a conventional system (FIG.3) will be given the same numerals as in FIG.6 and FIG.3, respectively, without further explanations thereof.

The channel estimation circuit 402 shown in FIG.9 uses after switching between the channel estimation circuit shown in FIG.6 and the channel estimation circuit shown in FIG.3 by means of a switch 501 controlled by a control section 502 in accordance with the phase rotation amount from the phase rotation detection circuit 401.

Specifically, when the phase rotation amount is small (that is, when it is recognized by the control section 502 that the phase rotation amount is small), a high-precision channel estimate can be obtained even using a conventional channel estimation, and therefore the switch 501 sends an in-phase-added pilot signal from the in-phase addition circuit 201 to a multiplier 42 under the control of the control section 502 so that the conventional channel estimation is performed. By means of the multiplier 42 and the vector addition circuit 43, vector addition is performed on channel estimates of each pilot block multiplied by a weight coefficient, as described above. By this means, a high-precision channel estimate is obtained without performing the channel estimation described in Embodiment 1 (FIG.6), enabling the necessary amount of computation to be reduced when the phase rotation amount is small.

Conversely, when the phase rotation amount is large (that is, when it is recognized by the control section 502 that the phase rotation amount is large), the switch 501 sends an in-phase-added pilot signal from the in-phase addition circuit 201 to the angle detection circuit 202 and absolute value computation circuit 204 under the control of the control section 502 so that the channel estimation described in Embodiment 1 is performed. The angle detection circuit 202 and absolute value computation circuit 204 perform similar operations as described in Embodiment 1. By this means, as in Embodiment 1, it is possible to reduce deterioration of information signal reception quality even when the phase rotation amount is large due to frequency offset and fading. The threshold between a small the phase rotation amount and a large phase rotation amount can be set, for example, according to whether or not the reception quality of a data signal that has undergone coherent detection exceeds a desired quality.

Also, in this embodiment, it is possible to switch weight coefficients for weighted addition in midcourse of a slot in the same way as in Embodiment 1. In addition, it is possible to change these weight coefficients in accordance with the phase rotation amount from the phase rotation detection circuit 401. Specifically, for example, weight coefficients used by the multiplier 205 are switched in midcourse of a slot (for example, increasing W2 and decreasing W1 and W2 in FIG.7) when the phase rotation amount is large, and weight coefficients used by the multiplier 205 are not switched when the phase rotation amount is small. By this means, high-precision channel estimation can be performed regardless of the phase rotation amount.

Thus, according to this embodiment, an increase in the amount of computation and the amount of memory used in channel estimation can be suppressed by using after switching between the channel estimation described in Embodiment 1 and conventional channel estimation in accordance with the phase rotation amount. Moreover, by controlling weight coefficients to be used in weighted addition in accordance with the phase rotation amount, it is possible to perform high-precision channel estimation regardless of the phase rotation amount.

In this embodiment, nothing has been stated concerning execution of RAKE combining, but by providing each finger with the despreading circuit 102, phase rotation detection circuit 401, channel estimation circuit 402, and coherent detection circuit 104 shown in FIG.8, and by providing a RAKE combining circuit that performs RAKE combining for data signals that have been subjected to coherent detection by the coherent detection circuit 104 in each finger, it is possible to perform maximal-ratio combining on data in each finger in the same way as in Embodiment 1. Thus, the reception quality of the data signal obtained by means of RAKE combining is preferable.

(Embodiment 3)

In this embodiment, a case is described, with reference to FIG. 10, where the phase component of a channel estimate is obtained using the conventional vector addition method in Embodiment 1 and Embodiment 2. FIG.10 is a block diagram showing the configuration of a channel estimation circuit in a receiving apparatus according to Embodiment 3 of the present invention. The sections in FIG.10 identical to those in Embodiment 1 (FIG.6) and a conventional system (FIG.3) will be given the same numerals as in FIG.6 and FIG.3, respectively, without further explanations thereof. Regarding the configuration of the receiving apparatus according to this embodiment, any parts except for the internal configuration of the channel estimation circuit 103 is the same as that shown in FIG.5, and therefore any detailed explanation for it is omitted.

The channel estimation circuit shown in FIG. 10 is configured so as to be equivalent to the channel estimation circuit according to Embodiment 1 (FIG.6). In FIG.10, a normalization circuit 600 performs normalization on a pilot signal (in-phase addition value) that has undergone in-phase addition by the in-phase addition circuit 201, and sends the normalized in-phase addition value to a multiplier 42. The multiplier 42 multiplies

the normalized in-phase addition value from the normalization circuit 600 by a pilot block weight coefficient, and obtains a multiplication value for the pilot block.

The vector addition circuit 43 adds the in-phase addition values (multiplication values) of each block that have been normalized and multiplied by each weight coefficient, and obtains a vector addition value. A normalization circuit 601 performs normalization on the obtained vector addition value. A multiplier 602 performs multiplication of the normalized vector addition value from the normalization circuit 601 and the amplitude component of the channel estimate from the amplitude computation circuit 206, and obtains a channel estimate.

Next, the operation of the receiving apparatus according to this embodiment will be described, taking the case where channel estimation is performed using the pilot block 302 in FIG.7 as an example. It is here assumed, as an example, that when channel estimation is performed using the pilot block 302, one pilot block before and one pilot block after the pilot block 302 (that is, the pilot block 301 and the pilot block 303) are to be used in weighted addition. Except for the channel estimation circuit, the operations in the receiving apparatus according to this embodiment are the same as in Embodiment 1, and therefore any detailed explanation for them is omitted.

In FIG.10, a processing similar to Embodiment 1 is executed regarding the amplitude component of the channel estimate, and it is obtained by the amplitude computation circuit 206. The channel estimate amplitude component obtained by the amplitude computation circuit 206 is sent to the multiplier 602.

Meanwhile, in the normalization circuit 600, normalization is performed on the in-phase addition value from the in-phase addition circuit 201 (the in-phase addition value of the pilot block 302). That is to say, in the normalization circuit 600, the in-phase addition value from the in-phase addition circuit 201 is made a vector with an amplitude magnitude of 1 (a unit vector). This is equivalent to elimination of the effect of the amplitude component from the in-phase addition value from the in-phase addition circuit 201, and is equivalent to obtainment of only the phase component using the in-phase addition value in the angle detection circuit 202 in Embodiment 1 (FIG.6).

The in-phase addition value of the normalized pilot block 302 is multiplied by weight coefficient (W2) of the pilot block 302 by the multiplier 42. By this means, the multiplication value for the pilot block 302 is obtained. The obtained multiplication value for the pilot block 302 is sent to the vector addition circuit 43.

In the vector addition circuit 43, multiplication values for each pilot block (that is, in-phase addition values of each pilot block multiplied by normalized weight coefficients) are added, and a vector addition value is obtained. Specifically, in the vector addition circuit 43, the multiplication value for the pilot block 302, the multiplication value for the pilot block 301, and the multiplication value for the pilot block 303 are added, and a vector addition value is obtained.

As regards the vector addition value obtained by the vector addition circuit 43, as stated above, when the phase rotation amount is small the amount of decrease in its amplitude component is small (FIG.4A), and when the phase rotation amount is large its amplitude component decreases. That is to say, although the degree of precision is low as to the amplitude component in the vector addition value obtained by this vector addition, the degree of precision is high as to the phase component. Therefore, in this embodiment, the use of the phase component in the vector addition value obtained by the vector addition circuit 43 is considered.

The vector addition value obtained by the vector addition circuit 43 is made a vector with an amplitude magnitude of 1 (a unit vector) by being normalized by the normalization circuit 601. The vector with an amplitude magnitude of 1 obtained by the normalization circuit 601 is multiplied by the channel estimate amplitude component from the amplitude computation circuit 206. By this means, a channel estimate is obtained.

As described above, the channel estimation circuit according to this embodiment is equivalent to the channel estimation circuit according to Embodiment 1 (FIG.6), and therefore the degree of precision of a channel estimate obtained in this embodiment is the same as the degree of precision of a channel estimate obtained in Embodiment 1. However, in this embodiment, the channel estimate is obtained without using the angle detection circuit 202 employed in Embodiment 1, enabling the necessary amount of computation and circuit scale (memory capacity) to be reduced compared with Embodiment 1.

In this embodiment, a case has been described where calculation of the phase component of a channel estimate using conventional vector addition is applied to the receiving apparatus according to Embodiment 1, but it is also possible for calculation of the phase component of a channel estimate in this way to be applied similarly to the receiving apparatus according to Embodiment 2.

Thus, according to this embodiment, normalized in-phase addition values for each pilot block undergo vector addition, and a vector addition value is obtained, this vector addition value is normalized and converted to a unit vector that represents the phase component, and then the channel estimate is obtained by multiplying the channel estimate amplitude component by this unit vector. By this means, the angle detection circuit 202 in Embodiment 1 and Embodiment 2 described above is rendered unnecessary, enabling the necessary amount of computation and circuit scale (memory capacity) to be reduced compared with Embodiment 1 and Embodiment 2.

(Embodiment 4)

In this embodiment, a case is described, with reference to FIG.11, where the degree of precision of a channel estimate obtained in Embodiment 3 is further improved. FIG.11 is a block diagram showing the configuration of a channel estimation circuit in a receiving apparatus according to Embodiment 4 of the present invention. The sections in FIG.11 identical to those in Embodiment 3 (FIG.10) will be given the same numerals as in FIG.10 without further explanations thereof. Except for the internal configuration of the channel estimation circuit 103, the configuration of the receiving apparatus according to this embodiment is the same as that shown in FIG.5, and therefore any detailed explanation for it is omitted.

The channel estimation circuit shown in FIG. 11 has a configuration that excludes the normalization circuit 600 in the channel estimation circuit in Embodiment 3 (FIG.10). That is to say, the in-phase addition circuit 201 sends an in-phase addition value to the multiplier 42, and the multiplier 42 multiplies together the in-phase addition value from the in-phase addition circuit 201 and the pilot block weight coefficient.

Next, the operation of the receiving apparatus according to this embodiment will be described, taking the case where channel estimation is performed using the pilot block 302 in FIG. 7 as an example. It is here assumed, as an example, that when channel estimation is performed using the pilot block 302, one pilot block before and one pilot block after pilot block 302 (that is, the pilot block 301 and the pilot block 303) are used in weighted addition. Except for the channel estimation circuit, the operations in the receiving apparatus according to this embodiment are the same as in Embodiment 1, and therefore any detailed explanation for them is omitted.

In FIG. 11, the channel estimate amplitude component is obtained by the amplitude computation circuit 206 by means of the same processing as in Embodiment 3, and is sent to the multiplier 602. Meanwhile, the in-phase addition value (the in-phase addition value of the pilot block 302) obtained by the in-phase addition circuit 201 is sent to the multiplier 42 without being normalized, and is multiplied by the weight coefficient (W2) of the pilot block 302 by the multiplier 42. By this means, the multiplication value for the pilot block 302 is obtained. The obtained multiplication value for the pilot block 302 is sent to the vector addition circuit 43.

In the vector addition circuit 43, multiplication values for each pilot block (that is, in-phase addition values of each pilot block multiplied by weight coefficients) are added, and a vector addition value is obtained. Specifically, in the vector addition circuit 43, the multiplication value for the pilot block 302, the multiplication value for the pilot block 301, and the multiplication value for the pilot block 303 are added, and a vector addition value is obtained.

The vector addition value obtained by the vector addition circuit 43 is made a vector with an amplitude magnitude of 1 (a unit vector) by being normalized by the normalization circuit 601. The vector obtained by the normalization circuit 601 in this embodiment differs from the vector obtained by the normalization circuit 601 in Embodiment 3 as to the following point.

In above-described Embodiment 3, in-phase addition values of each pilot block, normalized and multiplied by weight coefficients, are subjected to vector addition, and a vector addition value is obtained, and furthermore this vector addition value is normalized and a vector indicating the phase component is obtained. That is to say, in-phase addition values of each pilot block undergo weighted addition after all being converted to vectors with a magnitude of 1, and therefore the amplitude component of the in-phase addition values of each pilot block is not reflected in the vector indicating the phase component.

In this embodiment, on the other hand, in-phase addition values of each pilot block undergo weighted addition without being normalized, and therefore the amplitude component of the in-phase addition values of each pilot block is reflected in the vector indicating the phase component. That is to say, the vector indicating the phase component is such that the amplitude component of the in-phase addition value of a pilot block of which the amplitude component is larger is reflected more heavily, and the amplitude component of the in-phase addition value of a pilot block of which the amplitude component is smaller is reflected more lightly. As a result, a vector indicating the phase component obtained in this embodiment is of higher precision than a vector indicating the phase component obtained in Embodiment 3.

The vector obtained by the normalization circuit 601 as described above is multiplied in the multiplier 602 by the channel estimate amplitude component from the amplitude computation circuit 206. By this means, a channel estimate is obtained.

As described above, the degree of precision of a vector obtained by the normalization circuit 601 in this embodiment is higher than that of a vector obtained by the normalization circuit 601 in Embodiment 3, and therefore a channel estimate obtained in this embodiment is of higher precision than a channel estimate obtained with Embodiment 3.

Moreover, whereas Embodiment 3 requires normalization circuits that normalize the in-phase addition values of each pilot block (that is, a number of normalization circuits corresponding to the in-phase addition values that undergo vector addition), and a normalization circuit that normalizes the obtained vector addition value, this embodiment requires only a normalization circuit that normalizes the obtained vector addition value. Thus, with this embodiment, the necessary amount of computation and circuit scale (memory capacity) can be further reduced compared with Embodiment 3.

Thus, according to this embodiment, in-phase addition values for each pilot block undergo vector addition and a vector addition value is obtained, this vector addition value is normalized and converted to a unit vector that represents the phase component, and then the channel estimate is obtained by multiplying the channel estimate amplitude component by this unit vector. By this means, the normalization circuit 600 that normalizes the in-phase addition values of each pilot block in Embodiment 3 is rendered unnecessary, enabling the necessary amount of computation and circuit scale (memory capacity) to be reduced compared with Embodiment 3. Furthermore, as the amplitude component of the in-phase addition value of each pilot block is taken into consideration in obtaining a vector that represents the channel estimate phase component, a higher-precision channel estimate can be obtained compared with Embodiment 3.

In above Embodiment 1 through Embodiment 4, some cases have been described, as an example, where a receiving apparatus according to the present invention is applied to radio communications, but it is also possible for a receiving apparatus according to the present invention to be applied to cable communications.

As described above, according to the present invention, by performing pilot signal in-phase addition to calculate an in-phase addition value for each pilot symbol, and performing weighted addition using the amplitude component and phase component of the calculated in-phase addition value individually, the amplitude component and phase component of respective channel estimates are calculated, and therefore it is possible to provide a receiving apparatus whereby the amount of computation is suppressed, channel estimation precision is improved, and deterioration of information signal reception quality is reduced, even in a situation where frequency offset and fading are present.

This application is based on Japanese Patent Application No.2000-308883 filed on October 10, 2000. Its entire contents are expressly incorporated by reference herein.

Industrial Applicability

The present invention is suitable for use in a base station apparatus and communication terminal apparatus in a digital mobile communication system. A base station apparatus and communication terminal apparatus using the present invention can obtain a high-precision demodulated signal by providing a receiving apparatus whereby the amount of computation is suppressed, channel estimation precision is improved, and deterioration of information signal reception quality is reduced, even in a situation where frequency offset and fading are present, thus making it possible to perform good radio communications.

## Claims

**1.** A receiving apparatus comprising:

an in-phase adder that performs in-phase addition of a pilot signal in a received signal to calculate an in-phase addition value for every plurality of pilot symbols;
a component calculator that performs weighted addition using the amplitude component of the calculated in-phase addition value to calculate a channel estimate amplitude component, and performs weighted addition using the phase component of the calculated in-phase addition value to calculate a channel estimate phase component; and
a channel estimate generator that generates a channel estimate using the calculated amplitude component and phase component.

**2.** The receiving apparatus according to claim 1, wherein:

said component calculator comprises:

an amplitude component calculator that calculates a channel estimate amplitude component by multiplying the amplitude component of the calculated in-phase addition value by a plurality of pilot symbol weight coefficients to obtain a multiplication value for every plurality of pilot symbols, and by adding multiplication values for each plurality of pilot symbols; and
a phase component calculator that calculates a channel estimate phase component by performing phase computation processing using the phase component of the calculated in-phase addition value and a plurality of pilot symbol weight coefficients;
and wherein said channel estimate generator generates a channel estimate by converting the calculated amplitude component and phase component to a vector.

**3.** The receiving apparatus according to claim 1, wherein:

said component calculator comprises:

an amplitude component calculator that calculates a channel estimate amplitude component by multiplying the amplitude component of the calculated in-phase addition value by a plurality of pilot symbol weight coefficients to obtain a multiplication value for every plurality of pilot symbols, and by adding multiplication values

for each plurality of pilot symbols;
a vector addition value generator that generates a vector addition value by multiplying the calculated in-phase addition value by a plurality of pilot symbol weight coefficients to obtain a multiplication value for every plurality of pilot symbols , and by performing vector addition of multiplication values for each plurality of pilot symbols; and
a unit vector generator that generates a unit vector representing a channel estimate phase component by performing normalization on the generated vector addition value;
and wherein said channel estimate generator generates a channel estimate by multiplying the calculated channel estimate amplitude component by the generated unit vector.

**4.** The receiving apparatus according to claim 3, wherein said vector addition value generator obtains a multiplication value for every plurality of pilot symbols by multiplying a value resulting from normalization of the calculated in-phase addition value by a plurality of pilot symbol weight coefficients.

**5.** The receiving apparatus according to claim 1, further comprising:

a second channel estimate generator that generates a channel estimate by multiplying the calculated in-phase addition value by a plurality of pilot symbol weight coefficients to obtain a multiplication value for every plurality of pilot symbols, and by performing vector addition of multiplication values for each plurality of pilot symbols; and
a controller that causes a channel estimate to be generated either by said channel estimate generator or by said second channel estimate generator in accordance with a phase rotation amount detected using a received signal.

**6.** The receiving apparatus according to claim 1, further comprising a first setting device that sets a plurality of pilot symbol weight coefficients in accordance with the detected phase rotation amount.

**7.** The receiving apparatus according to claim 1, further comprising:

a coherent detector that performs coherent detection on an information signal in the received signal using the generated channel estimate; and
a second setting device that sets a plurality of pilot symbol weight coefficients in accordance with a position of the information signal in the received signal to be subjected to coherent detection.

**8.** A communication terminal apparatus provided with a receiving apparatus, said receiving apparatus comprising:

an in-phase adder that performs in-phase addition of a pilot signal in a received signal to calculate an in-phase addition value for every plurality of pilot symbols;
a component calculator that performs weighted addition using the amplitude component of the calculated in-phase addition value to calculate a channel estimate amplitude component, and performs weighted addition using the phase component of the calculated in-phase addition value to calculate a channel estimate phase component; and
a channel estimate generator that generates a channel estimate using the calculated amplitude component and phase component.

**9.** A base station apparatus provided with a receiving apparatus, said receiving apparatus comprising:

an in-phase adder that performs in-phase addition of a pilot signal in a received signal to calculate an in-phase addition value for every plurality of pilot symbols;
a component calculator that performs weighted addition using the amplitude component of the calculated in-phase addition value to calculate a channel estimate amplitude component, and performs weighted addition using the phase component of the calculated in-phase addition value to calculate a channel estimate phase component; and
a channel estimate generator that generates a channel estimate using the calculated amplitude component and phase component.

**10.** A receiving method comprising:

an in-phase adding step of performing in-phase addition of a pilot signal of a received signal to calculate an in-phase addition value for every plurality of pilot symbols;
a component calculating step of performing weighted addition using the amplitude component of the calculated in-phase addition value to calculate a channel estimate amplitude component, and performing weighted addition using the phase component of the calculated in-phase addition value to calculate a channel estimate phase component; and

a channel estimate generating step of generating a channel estimate using the calculated amplitude component and phase component.

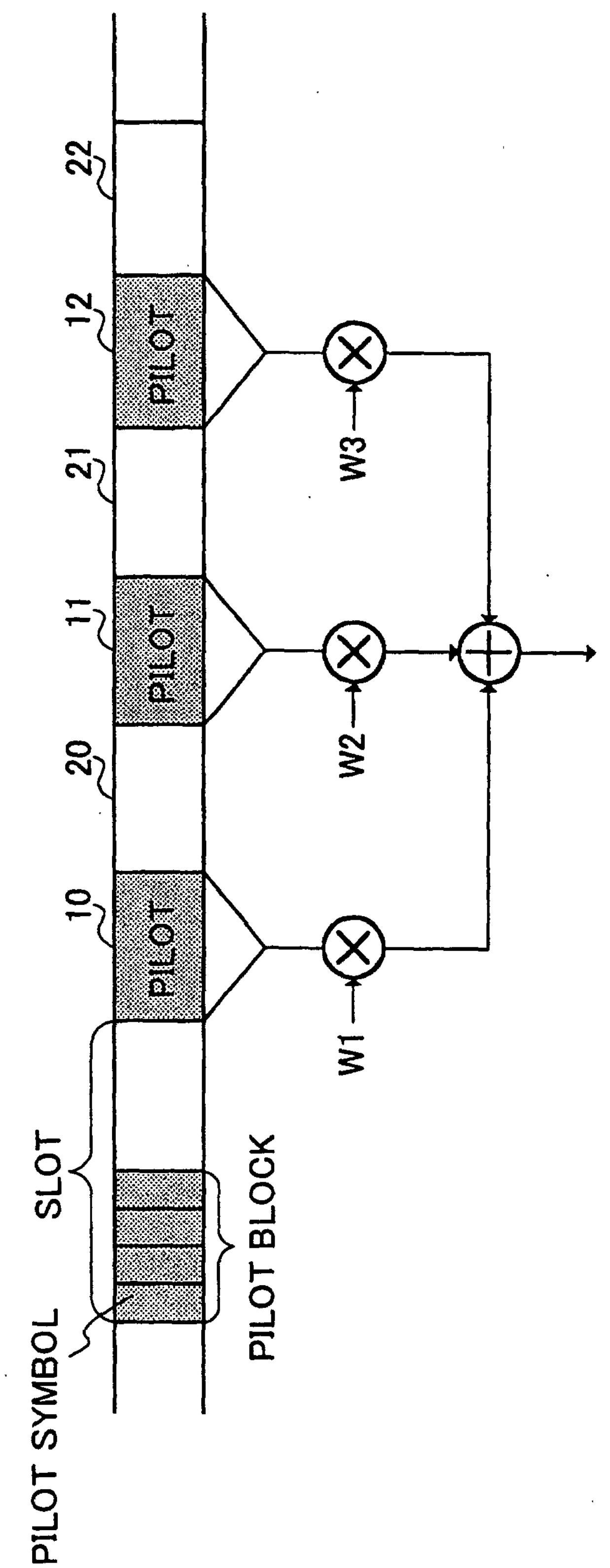
PILOT SYMBOL
SLOT
PILOT BLOCK
PILOT
PILOT
PILOT
10
20
11
21
12
22
W1
W2
W3

FIG.1

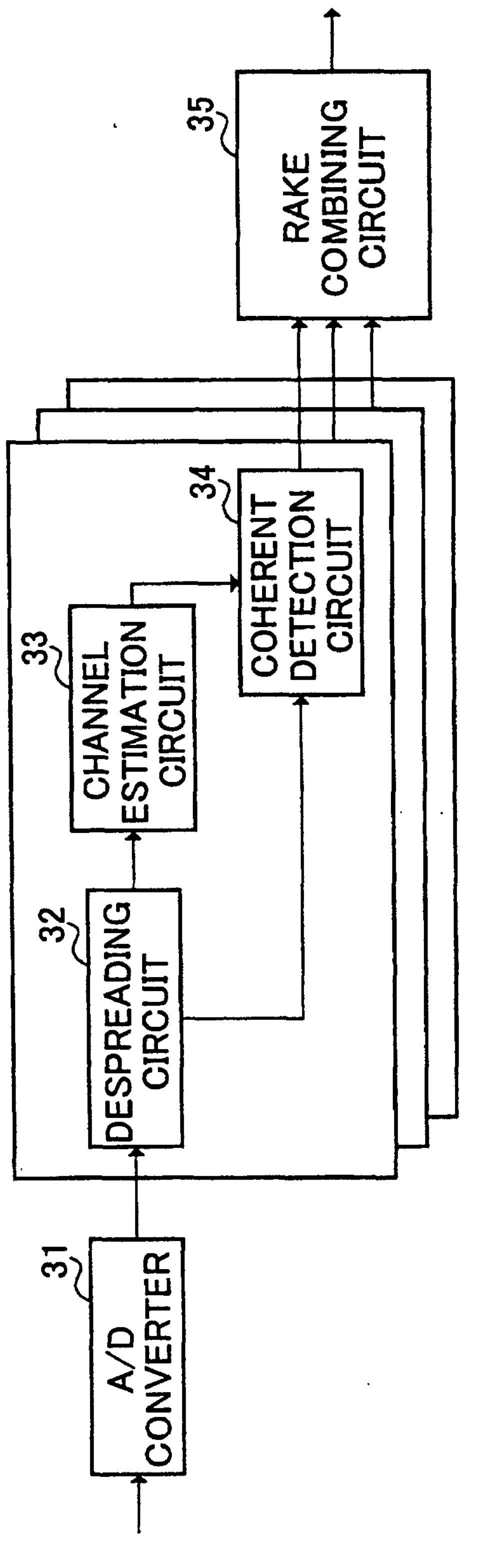
A/D CONVERTER
31
DESPREADING CIRCUIT
32
CHANNEL ESTIMATION CIRCUIT
33
COHERENT DETECTION CIRCUIT
34
RAKE COMBINING CIRCUIT
35

FIG.2

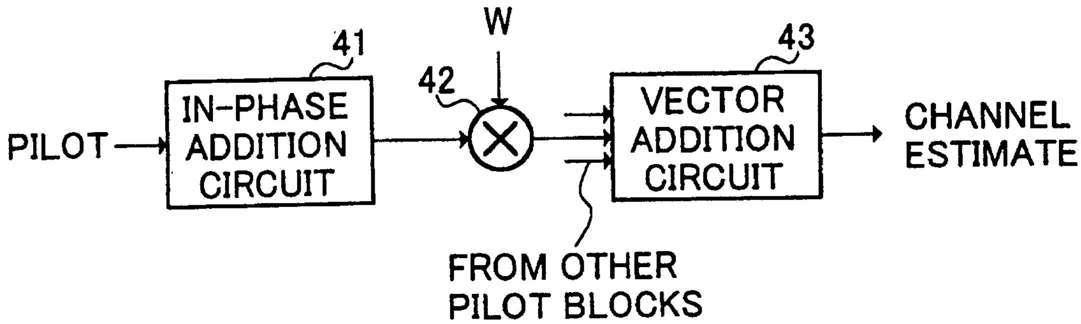


FIG.3

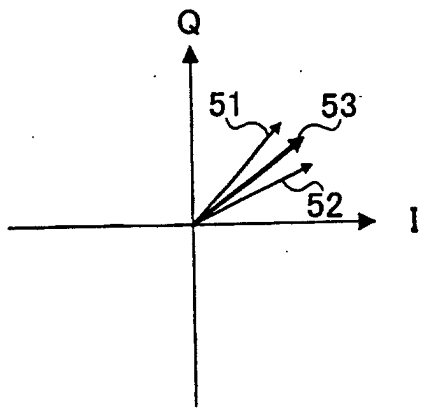


FIG.4A

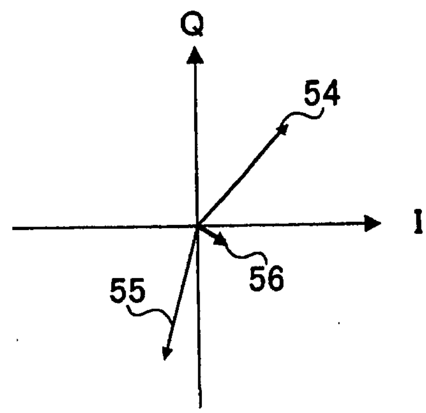


FIG.4B

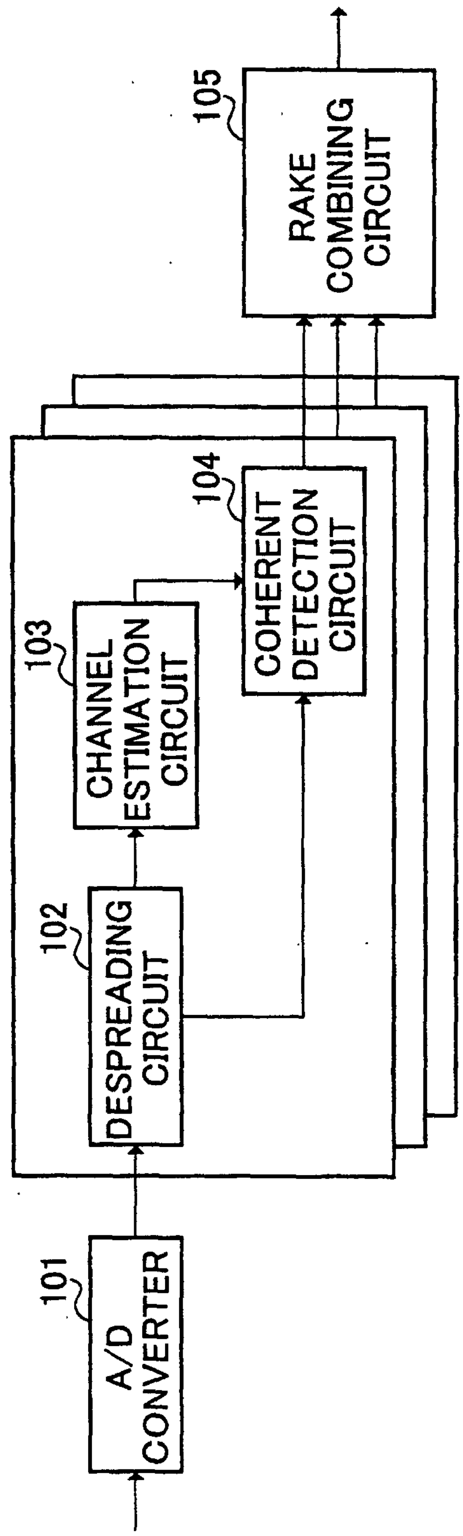
101
A/D CONVERTER
102
DESPREADING CIRCUIT
103
CHANNEL ESTIMATION CIRCUIT
104
COHERENT DETECTION CIRCUIT
105
RAKE COMBINING CIRCUIT

FIG.5

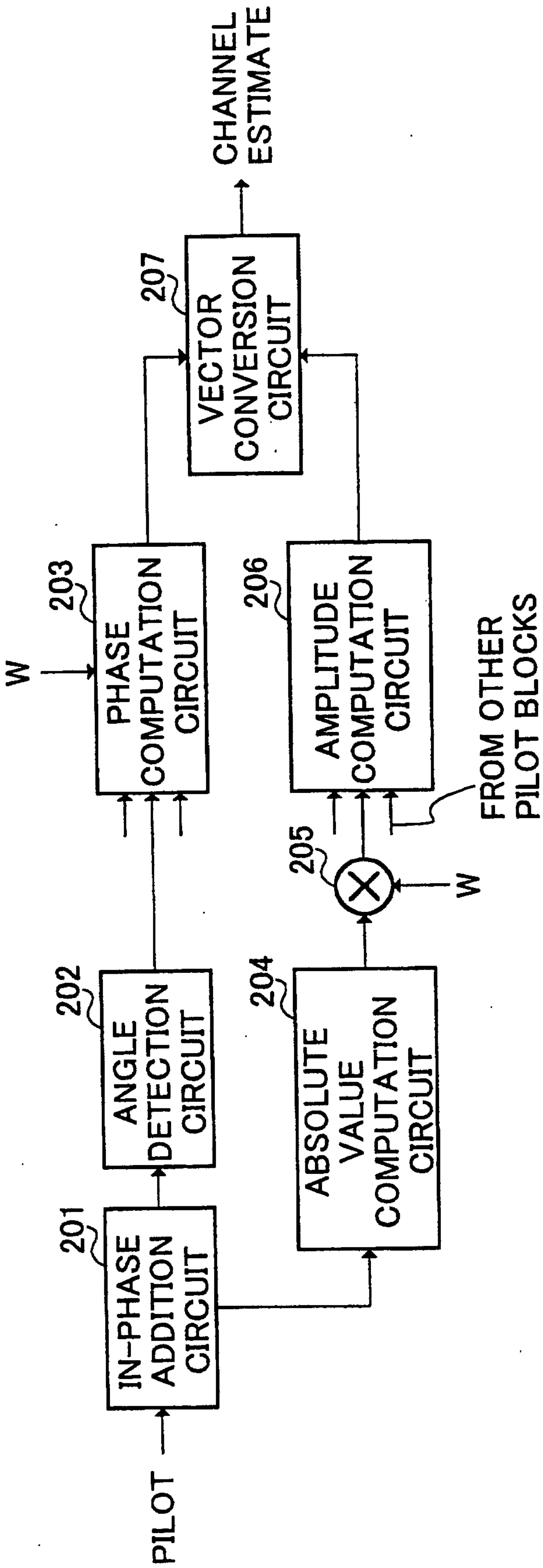
PILOT
IN-PHASE ADDITION CIRCUIT
201
ANGLE DETECTION CIRCUIT
202
PHASE COMPUTATION CIRCUIT
203
W
ABSOLUTE VALUE COMPUTATION CIRCUIT
204
205
W
AMPLITUDE COMPUTATION CIRCUIT
206
FROM OTHER PILOT BLOCKS
VECTOR CONVERSION CIRCUIT
207
CHANNEL ESTIMATE

FIG.6

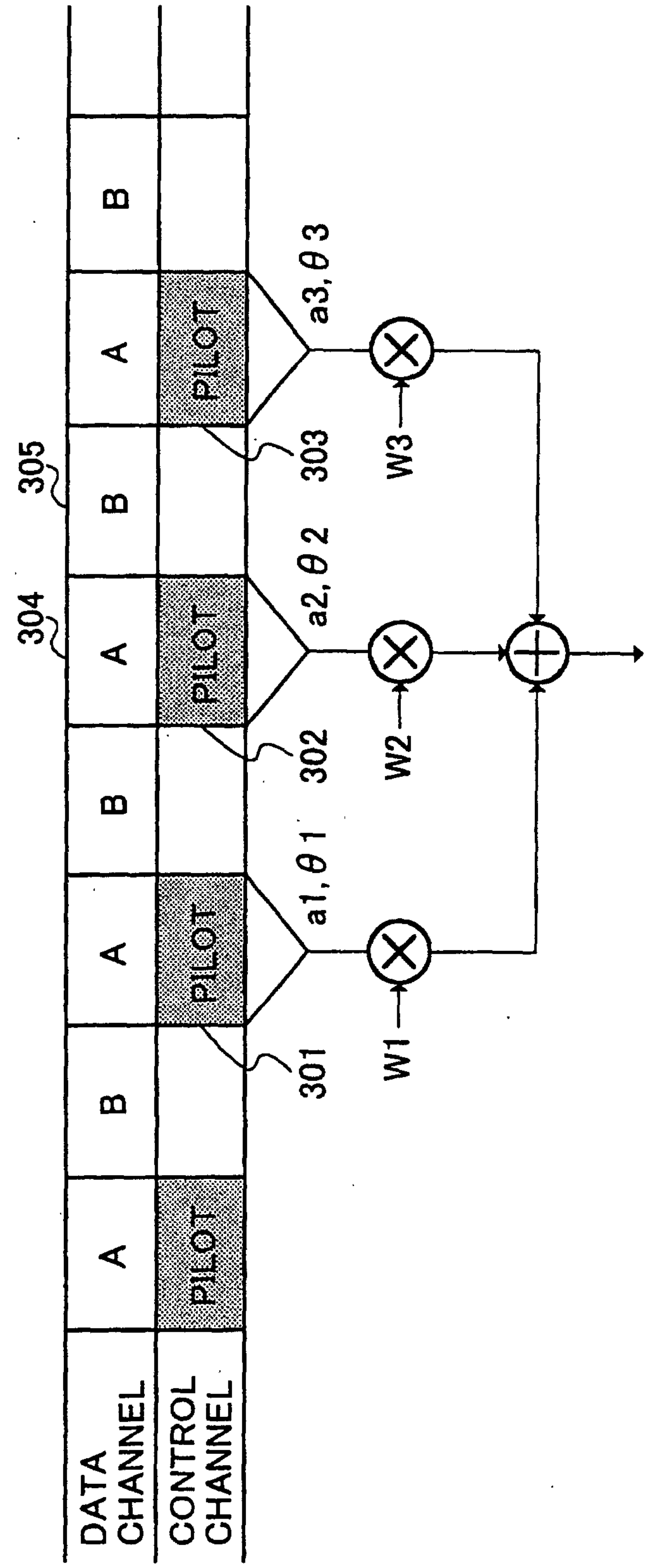
DATA CHANNEL
CONTROL CHANNEL
A
B
PILOT
301
302
303
304
305
a1, θ1
a2, θ2
a3, θ3
W1
W2
W3

FIG.7

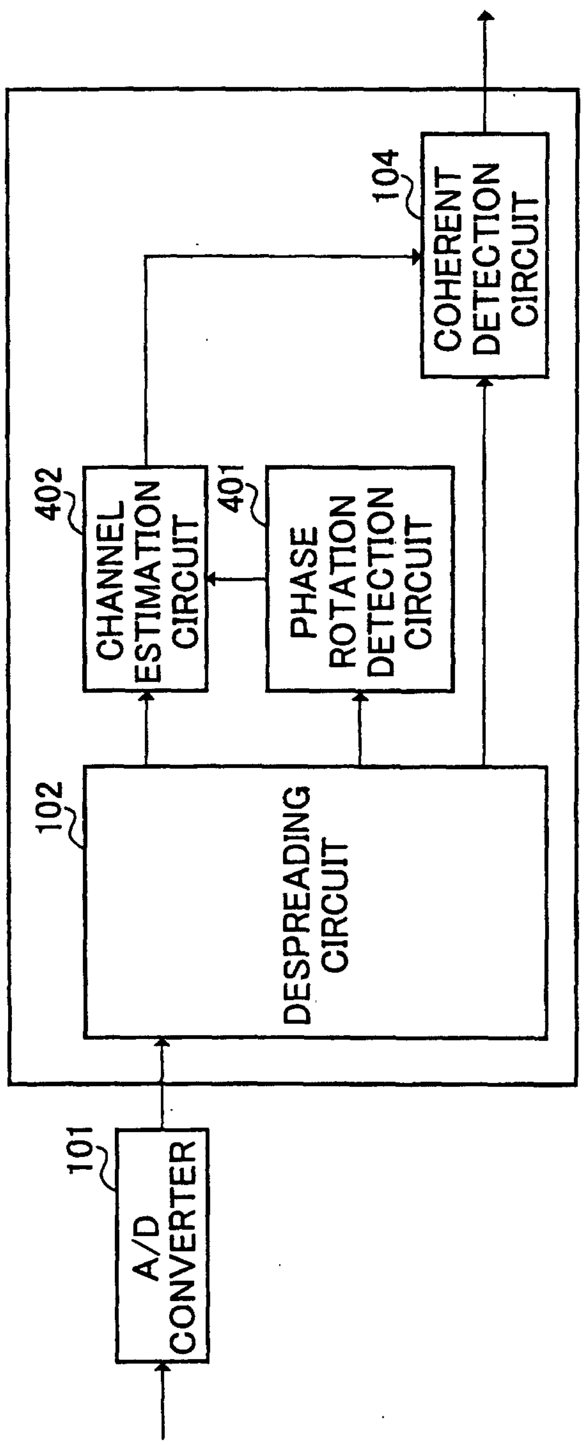
A/D CONVERTER
101
DESPREADING CIRCUIT
102
CHANNEL ESTIMATION CIRCUIT
402
PHASE ROTATION DETECTION CIRCUIT
401
COHERENT DETECTION CIRCUIT
104

FIG.8

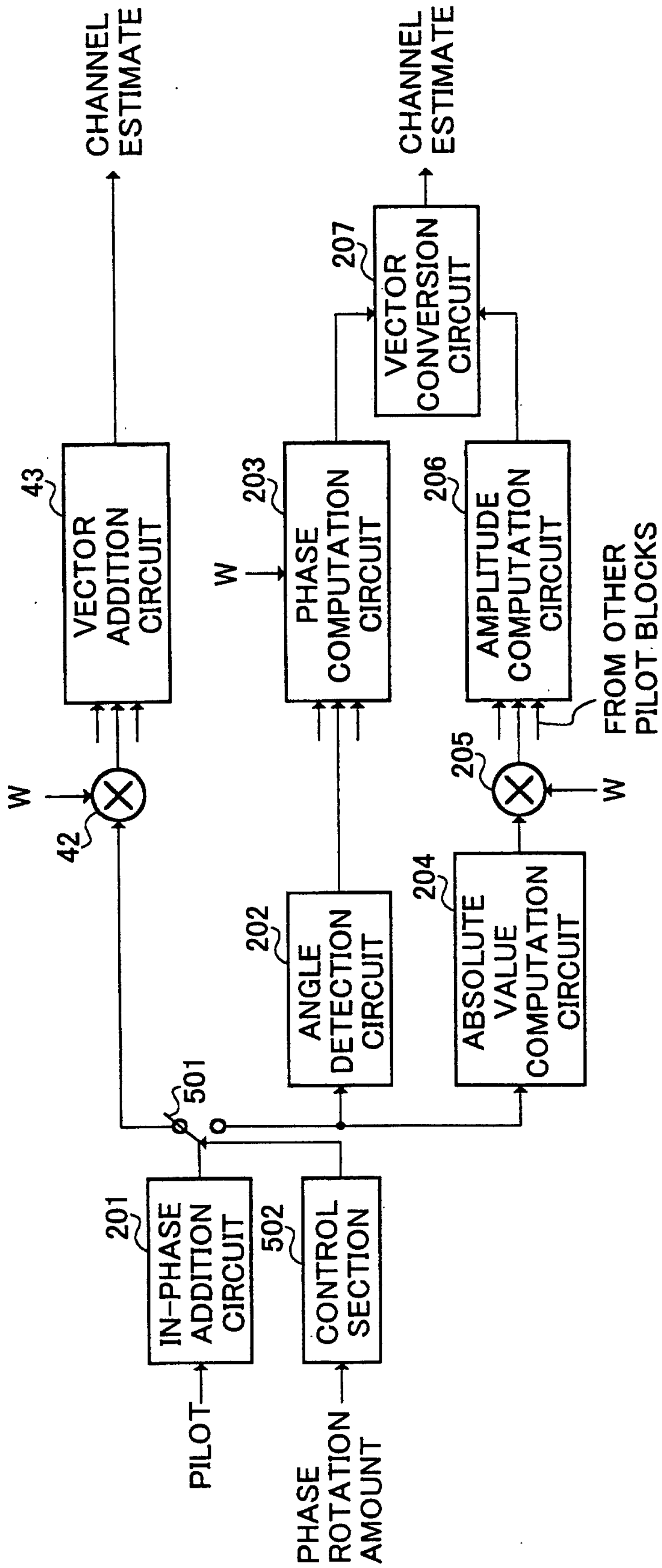
PILOT
IN-PHASE ADDITION CIRCUIT
201
PHASE ROTATION AMOUNT
CONTROL SECTION
502
501
42
W
43
VECTOR ADDITION CIRCUIT
CHANNEL ESTIMATE
ANGLE DETECTION CIRCUIT
202
W
PHASE COMPUTATION CIRCUIT
203
VECTOR CONVERSION CIRCUIT
207
CHANNEL ESTIMATE
ABSOLUTE VALUE COMPUTATION CIRCUIT
204
205
W
AMPLITUDE COMPUTATION CIRCUIT
206
FROM OTHER PILOT BLOCKS

FIG.9

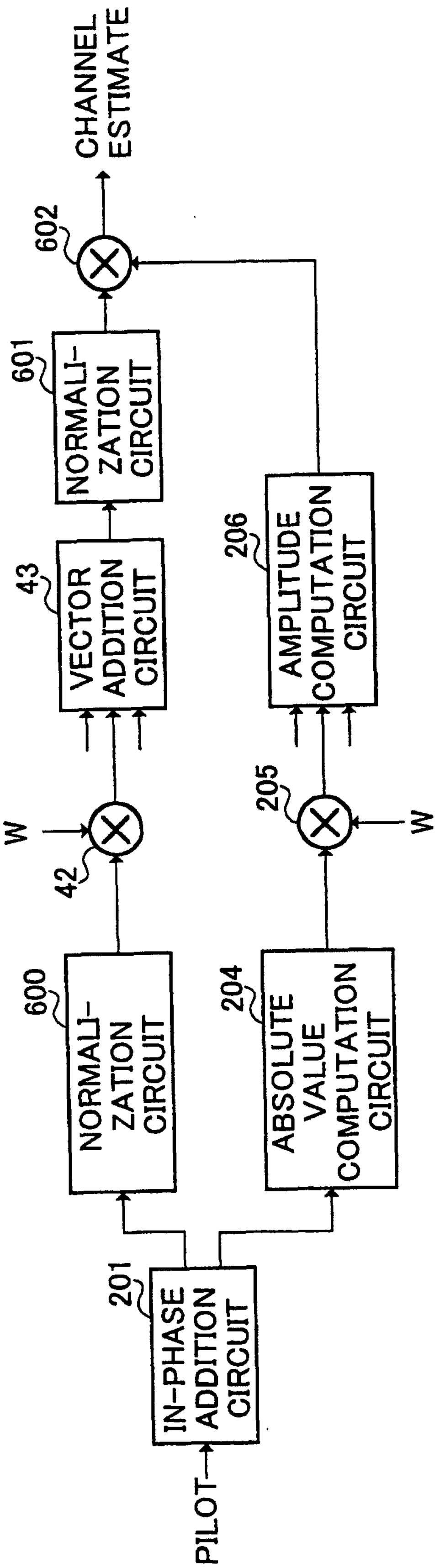
PILOT
201
IN-PHASE ADDITION CIRCUIT
600
NORMALI-ZATION CIRCUIT
204
ABSOLUTE VALUE COMPUTATION CIRCUIT
42
W
205
W
43
VECTOR ADDITION CIRCUIT
206
AMPLITUDE COMPUTATION CIRCUIT
601
NORMALI-ZATION CIRCUIT
602
CHANNEL ESTIMATE

FIG.10

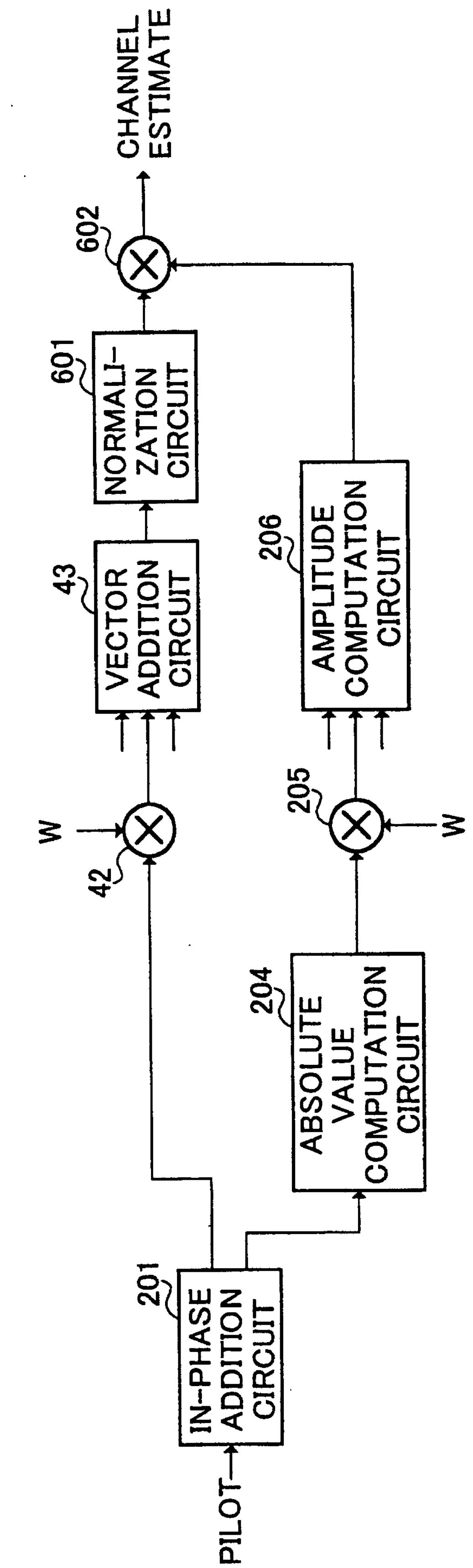
PILOT
IN-PHASE ADDITION CIRCUIT
201
ABSOLUTE VALUE COMPUTATION CIRCUIT
204
42
W
205
W
VECTOR ADDITION CIRCUIT
43
AMPLITUDE COMPUTATION CIRCUIT
206
NORMALI-ZATION CIRCUIT
601
602
CHANNEL ESTIMATE

FIG.11

## INTERNATIONAL SEARCH REPORT

International application No.
PCT/JP01/08841

A. CLASSIFICATION OF SUBJECT MATTER
Int.Cl[7] H04J13/04, H04B1/707, H04L27/22

According to International Patent Classification (IPC) or to both national classification and IPC

B. FIELDS SEARCHED

Minimum documentation searched (classification system followed by classification symbols)
Int.Cl[7] H04B1/69-1/713, H04J13/00-13/06
H04L27/00-27/38

Documentation searched other than minimum documentation to the extent that such documents are included in the fields searched
Jitsuyo Shinan Koho 1926-1996 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)
JOIS

C. DOCUMENTS CONSIDERED TO BE RELEVANT

| Category* | Citation of document, with indication, where appropriate, of the relevant passages | Relevant to claim No. |
|---|---|---|
| A | JP 2000-244366 A (NEC Corporation), 08 September, 2000 (08.09.00), Par. Nos. [0012] to [0014]; all drawings & EP 1032138 A2 & CN 1264970 A2 & BR 200000584 A & JP 3149868 B2 & KR 2000076725 A | 1-10 |
| A | JP 10-51424 A (NTT Ido Tsushinmo K.K.), 20 February, 1998 (20.02.98), Full text; all drawings (Family: none) | 1-10 |
| A | JP 11-186990 A (NTT Ido Tsushinmo K.K.), 09 July, 1999 (09.07.99), Full text; all drawings & WO 99/31835 A1 & EP 11186990 A1 & CN 1248361 A & KR 2000071166 A | 1-10 |
| A | WO 99/55033 A1 (NTT Ido Tsushinmo K.K.), 28 October, 1999 (28.10.99), Full text; all drawings & EP 996247 A1 & CN 1266569 A | 1-10 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
13 December, 2001 (13.12.01)

Date of mailing of the international search report
25 December, 2001 (25.12.01)

Name and mailing address of the ISA/
Japanese Patent Office

Facsimile No.

Authorized officer

Telephone No.

Form PCT/ISA/210 (second sheet) (July 1992)

## INTERNATIONAL SEARCH REPORT

International application No.
PCT/JP01/08841

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2001-189768 A (Matsushita Electric Ind. Co., Ltd.), 10 July, 2001 (10.07.01), Full text; all drawings (Family: none) | 1-10 |
| P,A | JP 2001-267960 A (NEC Corporation), 28 September, 2001 (28.09.01), Full text; all drawings (Family: none) | 1-10 |

Form PCT/ISA/210 (continuation of second sheet) (July 1992)